# EUROPÄISCHE PATENTSCHRIFT

(11) **EP 3 815 940 B1**
(45) Veröffentlichungstag und Bekanntmachung des Hinweises auf die Patenterteilung: **04.10.2023**
(21) Anmeldenummer: 20202198.6
(22) Anmeldetag: 16.10.2020
(51) Int. Cl.: B60G 11/16, B60G 7/00, B60G 17/02, F16F 1/04

(54) **FAHRWERKSLENKER**
SUSPENSION ARM
BRAS DE SUSPENSION DE TRAIN DE ROULEMENT

(30) Priorität: 31.10.2019 DE 102019129431
(43) Veröffentlichungstag der Anmeldung: 05.05.2021
(73) Patentinhaber: THK Co., Ltd., Tokyo 108-8506 (JP)
(72) Erfinder: Kirsch, Vadim, 40233 Düsseldorf (DE); Madivala, Manjunatha, 40233 Düsseldorf (DE); Rajagopal, Tamil Selvan, 40233 Düsseldorf (DE); Saito, Wataru, Tokyo, Tokyo 108-8506 (JP); Tillmann, Marius, 40233 Düsseldorf (DE); Walter, Harald, 40233 Düsseldorf (DE)
(74) Vertreter: Prinz & Partner mbB

(56) Entgegenhaltungen:
- EP-A2- 1 479 542
- WO-A1-2016/200030
- DE-A1-102016 213 425
- JP-A- 2007 253 862

## Beschreibung

Die Erfindung betrifft einen Fahrwerkslenker für eine Radaufhängung, insbesondere eines Kraftfahrzeugs.

Fahrwerkslenker sind wesentlicher Bestandteil eines Fahrwerks eines Fahrzeugs, da sie eine Verbindung zwischen einem Rad und einer Karosserie des Fahrzeugs herstellen und eine sichere Radführung gewährleisten. Dabei übertragen die Fahrwerkslenker die u.a. Querkräfte zwischen Rad und Karosserie. Zudem führen die Fahrwerkslenker das Rad in im Wesentlichen vertikaler Richtung.

Zur Dämpfung und Abfederung der während der Fahrt des Fahrzeugs auftretenden vertikalen Bewegungen des Rads relativ zur Fahrzeugkarosserie sind zwischen dem Fahrwerkslenker und der Karosserie ein Stoßdämpfer und eine Feder vorgesehen.

Falls die Bodenfreiheit des Fahrzeugs auch bei unterschiedlichen Beladungszuständen konstant gehalten werden soll, wird eine sogenannte Niveauregulierung verwendet, die meist als elektrohydraulische oder elektropneumatische Systeme ausgeführt sind. Derartige elektrohydraulische oder elektropneumatische Systeme nehmen im Fahrzeug durch das Reservoir für das verwendete Medium sowie durch die Leitungen und Pumpen einen sehr großen Bauraum ein und stellen ein großes Zusatzgewicht dar. Zudem sind derartige Systeme anfällig für Leckagen und stellen einen erheblichen Kostenfaktor dar.

Die EP 1 479 542 A2 offenbart eine in die Federung eines Kraftfahrzeugs integrierte Höhenverstellung, umfassend eine obere Spiralfeder, die auf einem unteren Feder-Widerlager gelagert ist, und eine untere Spiralfeder, die an einem oberen Feder-Widerlager gelagert ist. Die beiden Feder-Widerlager sind durch einen Schraubmechanismus miteinander gekoppelt. Indem das untere Feder-Widerlager gedreht wird, wird die Vorspannung der unteren Feder und damit auch die Position der beiden Feder-Widerlager verändert.

Die Aufgabe der Erfindung ist es, eine alternative Möglichkeit zur Niveauregulierung des Fahrzeugs unter Vermeidung der Nachteile des Stands der Technik zu schaffen.

Diese Aufgabe wird erfindungsgemäß gelöst durch einen Fahrwerkslenker für eine Radaufhängung, der einen Lenkerkörper, ein Feder-Widerlager und einen Aktor aufweist, der zwischen dem Lenkerkörper und dem Feder-Widerlager angeordnet ist und mit dem die Position des Feder-Widerlagers relativ zum Lenkerkörper eingestellt werden kann. Dabei umfasst der Aktor ein Hubgetriebe, das als ein Bewegungsgewinde ausgebildet ist und das eine Hubspindel aufweist, auf der das Feder-Widerlager angeordnet ist oder an der das Feder-Widerlager axial beweglich gelagert ist. Die axiale oder rotatorische Bewegung der Hubspindel wird somit auf das Feder-Widerlager übertragen, wodurch es axial entlang der Aktorachse verschoben wird.

In anderen Worten ausgedrückt, ist durch den Aktor ein Abstand zwischen dem Lenkerkörper und dem Feder-Widerlager einstellbar. Durch die Betätigung des Aktors kann das Feder-Widerlager entlang der Aktorachse verschoben werden. Infolgedessen wird eine zwischen dem Federwiderlager und einer Karosserie angeordnete Feder und zugleich die Karosserie, insbesondere senkrecht zur Fahrbahnoberfläche, verschoben. So kann der Abstand zwischen dem Lenkerkörper und der Feder und der Abstand zwischen Karosserie und Boden (Bodenfreiheit) eingestellt werden. In anderen Worten ausgedrückt kann durch den Aktor eine Niveauregulierung des Fahrzeugs erfolgen, durch die beispielsweise ein Beladungsausgleich geschaffen, das Beladen erleichtert, die Fahrdynamik beeinflusst, indem die Wirkung eines Stabilisators simuliert wird, oder die aerodynamischen Eigenschaften verändert werden können.

Durch das Hubgetriebe kann unter geringem Platzbedarf eine Rotationsbewegung eines Antriebs oder eines Antriebsgetriebes des Aktors in eine Translationsbewegung des Feder-Widerlagers umgewandelt werden.

Erfindungsgemäß ist außerdem vorgesehen, dass der Aktor ein Gehäuse aufweist, an dem zumindest ein Befestigungsmittel zur formschlüssigen und/oder kraftschlüssigen Befestigung des Aktorgehäuses mit dem Lenkerkörper angebracht ist. Das Gehäuse schützt die innenliegenden Bauteile des Aktors vor äußeren Einflüssen, wie zum Beispiel Flüssigkeit, Dreck oder Steinschlag, und dient gleichzeitig der Befestigung des Aktors am Lenkerkörper. Die formschlüssige und/oder kraftschlüssige Befestigung kann dabei relativ einfach gelöst werden, sodass ein einfacher Austausch des Aktors möglich ist. Zudem kann der Aktor so separat zum Lenkerkörper gefertigt werden, wodurch die gesamte Herstellung des Fahrwerkslenkers vereinfacht wird.

Die Hubspindel ist erfindungsgemäß zumindest teilweise im Aktorgehäuse aufgenommen und/oder im Aktorgehäuse axial verschieblich oder rotierbar gelagert. Auf diese Weise wird zum einen ein sicherer Halt der Hubspindel im Aktorgehäuse gewährleistet und zum anderen wird eine Bewegung der Hubspindel und demnach des Feder-Widerlagers ermöglicht.

Beispielsweise ist das Bewegungsgewinde ein Kugelumlauftrieb oder ein Trapezgewindetrieb. Der Trapezgewindetrieb weist eine hohe Belastbarkeit auf, und während eines Betriebs des Kugelumlauftriebs kommt es zu geringer Reibung.

Das Hubgetriebe kann als teleskopisches Hubgetriebe ausgebildet sein. Hierbei wird während des Betriebs ein Hub erzeugt, der größer als eine Bauhöhe des Getriebes ist. So kann weiter Platz eingespart werden.

Optional kann das Hubgetriebe selbsthemmend sein, sodass keine zusätzlichen Bauteile zur Arretierung des Feder-Widerlagers in einer Position benötigt werden.

Alternativ kann der Aktor eine separate Arretiervorrichtung aufweisen, durch die ein bewegliches Teil des Hubgetriebes in verschiedenen Positionen, insbesondere formschlüssig oder kraftschlüssig arretierbar ist. Bei gelöster Arretierung ist hier weniger Kraftaufwand notwendig, um die Translationsbewegung des Feder-Widerlagers über das Hubgetriebe durchzuführen, da das Hubgetriebe hier nicht selbsthemmend ist.

Beispielsweise kann die Arretierung elektromechanisch erfolgen, zum Beispiel durch einen Hubmagnet.

Es kann beispielsweise auch vorgesehen sein, dass die Arretierung mechanisch durch die Aktorbewegung selbst erfolgt. So können zusätzliche Bauteile einer separaten Arretiervorrichtung eingespart werden.

Ferner kann die rotatorische Bewegung einer Motorwelle des Antriebs, beispielsweise eines Bürstenmotors, arretiert werden, damit das Feder-Widerlager in seiner aktuellen Position verbleibt. So können zusätzliche Bauteile zur Arretierung innerhalb des Hubgetriebes vermieden werden.

Ein weiterer Aspekt sieht vor, dass das Feder-Widerlager direkt an der Hubspindel, insbesondere direkt auf der Hubspindel angeordnet ist. Es ist demnach kein weiteres, in erster Linie kraft- und/oder bewegungsübertragendes Bauteil zwischen dem Feder-Widerlager und der Hubspindel angeordnet. Das spart Platz und gewährleistet eine effiziente Kraft- und/oder Bewegungsübertragung.

Es kann vorgesehen sein, dass das Hubgetriebe eine Hubmutter aufweist, die im Aktorgehäuse rotierbar gelagert ist und die Hubspindel axial verstellt. Durch die Lagerung im Aktorgehäuse sind die Hubmutter und das Lager vor äußeren Einflüssen, wie Schmutz, Flüssigkeit oder Steinschlag, geschützt. Zudem kann durch die Rotationsbewegung bauraumsparend die axiale Bewegung der Hubspindel und des Feder-Widerlagers erzielt werden.

Alternativ kann die Hubmutter, insbesondere integraler Teil des Feder-Widerlagers sein und/oder durch die Hubspindel axial verstellbar sein. So können Bauteile und Bauraum eingespart werden.

Optional kann das Feder-Widerlager über die Hubmutter an der Hubspindel angebracht sein. Auch das spart Bauteile und Bauraum.

Vorzugsweise ist der Aktor elektromechanisch. Dadurch sind keine Reservoire für ein Medium, Leitungen und Pumpen notwendig, wodurch viel Bauraum und Gewicht eingespart werden kann.

Insbesondere ist das Aktorgehäuse durch eine Schraubverbindung, eine Nietverbindung, eine Clipsverbindung und/oder eine Clinchverbindung am Lenkerkörper befestigt. Diese Verbindungen können relativ einfach und kostengünstig hergestellt werden und teilweise sehr leicht wieder gelöst werden.

Die Befestigungsmittel sind dabei Schrauben, Nieten, Rasthaken oder verformte Vorsprünge.

Der Rasthaken kann am Aktorgehäuse beispielsweise einteilig angeformt sein, wodurch das Aktorgehäuse einfach hergestellt werden kann.

Alternativ kann der Rasthaken separat zum Aktorgehäuse ausgebildet und am Aktorgehäuse befestigt sein. Bei einer stark beanspruchten Verbindung zwischen dem Aktorgehäuse und dem Lenkerkörper kann so der Rasthaken separat aus einem stabileren Material gefertigt werden und dadurch eine zuverlässige Verbindung zwischen dem Aktorgehäuse und dem Lenkerkörper gewährleitstet werden. Gleichzeitig können so die Herstellungskosten reduziert werden, da nicht das gesamte Aktorgehäuse aus dem stabilen und teureren Material gefertigt werden muss.

In einer weiteren Ausführungsform weist der Aktor ein Gehäuse auf, das zumindest stoffschlüssig am Lenkerkörper befestigt ist. Durch den Stoffschluss können das Aktorgehäuse und der Lenkerkörper am zuverlässigsten miteinander verbunden werden und dabei die Anzahl an separaten Einzelteilen im Vergleich zu einer kraft- und/oder formschlüssigen Befestigung reduziert werden. Zudem kann der Aktor so separat zum Lenkerkörper gefertigt werden, wodurch die gesamte Herstellung des Fahrwerkslenkers vereinfacht wird.

Insbesondere ist das Aktorgehäuse durch eine Schweißverbindung, eine Lötverbindung, eine Klebeverbindung und/oder eine Spritzgussverbindung am Lenkerkörper befestigt. Diese Verbindungen sind zuverlässig und langlebig und können relativ einfach und kostengünstig hergestellt werden.

Das Aktorgehäuse und der Lenkerkörper können aus dem gleichen Material bestehen. So kann eine einfache Herstellung ermöglicht werden

Alternativ können das Aktorgehäuse und der Lenkerkörper aus unterschiedlichen Materialien bestehen. Auf diese Weise können Bereiche mit weniger Beanspruchung aus günstigeren Material hergestellt werden.

Gemäß einer weiteren Ausführungsform ist der Lenkerkörper so geformt, dass der Lenkerkörper zumindest einen Teil eines Gehäuses für den Aktor bildet. So müssen weniger Teile zur Herstellung des Lenkerkörpers und des Aktorgehäuses verwendet werden, und es kann zusätzlich Gewicht eingespart werden. Außerdem wird der zumindest eine Teil des Aktorgehäuses automatisch mit dem Lenkerkörper hergestellt, wodurch zusätzliche Fertigungsschritte entfallen.

Es kann vorgesehen sein, dass der Lenkerkörper ein Teilgehäuse und das Aktorgehäuse ein Teilgehäuse des Aktors bilden, die über eine oder mehrere der oben genannten Befestigungsmethoden aneinander angebracht sind. So kann der Aktor leicht in das Teilgehäuse des Lenkerkörpers eingesetzt werden und je nach Befestigungsmethode leicht aus dem Teilgehäuse des Lenkerkörpers entfernt werden.

Eine weitere Ausführungsform sieht vor, dass der Lenkerkörper ein Metall-Kunststoff-Verbundbauteil ist. Zum einen kann über das Kunststoffbauteil das Aktorgehäuse im Lenkerkörper befestigt werden, oder das Kunststoffbauteil bildet selbst zumindest einen Teil des Aktorgehäuses. Zum anderen verstärkt das leichte Kunststoffbauteil den Lenkerkörper erheblich, sodass Material zur Herstellung des Lenkerkörpers eingespart werden kann, das zur Erreichung der gleichen Steifigkeit ohne Kunststoffbauteil notwendig wäre. Dadurch können das Gewicht und der Materialaufwand zur Herstellung des Lenkerkörpers deutlich reduziert werden. Das Kunststoffbauteil erfüllt demnach eine Mehrfachfunktion.

Ein Aspekt sieht vor, dass der Lenkerkörper einen Befestigungsflansch aufweist, an dem ein flanschartiger Vorsprung des Aktorgehäuses anliegt. Die Flansche sind leicht zugänglich und bieten sich dadurch sehr gut zur Befestigung des Aktorgehäuses am Lenkerkörper an.

Insbesondere bildet der Lenkerkörper im Querschnitt einen Aufnahmeraum, in dem der Aktor integriert oder aufgenommen ist. Der Aufnahmeraum dient als eine Art Schutzraum für den Aktor vor äußeren Einflüssen, wie beispielsweise Steinschlag, Dreck, Nässe oder Ähnlichem.

Beispielsweise ist der Lenkerkörper im Querschnitt H- oder U-förmig. Durch die H- oder U-Form wird der Aufnahmeraum gebildet, in dem der Aktor aufgenommen werden kann. Der Befestigungsflansch kann dabei an einer offenen Seite des H oder U angebracht sein und im Wesentlichen senkrecht vom Lenkerkörper nach außen hin abstehen.

Der Aktor kann Teil eines aktiven Fahrwerks sein, das von einer Steuerung in unterschiedliche Betriebszustände gebracht wird oder für das ein Bediener unterschiedliche Modi vorwählen kann. So können beispielsweise verschiedene Fahrmodi mit unterschiedlicher Bodenfreiheit oder Kurvenlage des Fahrzeugs manuell angewählt werden oder eine bessere Fahrdynamik durch automatische Ansteuerung des Aktors erzielt werden.

Weitere Vorteile und Eigenschaften der Erfindung ergeben sich aus der nachfolgenden Beschreibung sowie aus den beigefügten Zeichnungen, auf die Bezug genommen wird. In den Zeichnungen zeigen:
- Figur 1 eine schematische Ansicht einer Radaufhängung mit einem erfindungsgemäßen Fahrwerkslenker, bei dem sich ein Aktor in einem eingefahrenen Zustand befindet,
- Figur 2 eine schematische Ansicht der Radaufhängung mit dem erfindungsgemäßen Fahrwerkslenker gemäß Figur 1, bei dem sich der Aktor in einem ausgefahrenen Zustand befindet,
- Figur 3 eine Draufsicht des erfindungsgemäßen Fahrwerkslenkers gemäß den Figuren 1 und 2,
- Figur 4 eine Schnittansicht des erfindungsgemäßen Fahrwerkslenkers gemäß dem Schnitt A-A aus Figur 3, bei dem sich der Aktor in einem eingefahrenen Zustand befindet,
- Figur 5 eine Schnittansicht des erfindungsgemäßen Fahrwerkslenkers gemäß dem Schnitt A-A aus Figur 3, bei dem sich der Aktor in einem ausgefahrenen Zustand befindet,
- Figur 6 eine Schnittansicht einer ersten Befestigungsvariante des Aktors an einem Lenkerkörper des erfindungsgemäßen Fahrwerkslenkers gemäß dem Schnitt A-A aus Figur 3,
- Figur 7 eine Schnittansicht einer zweiten Befestigungsvariante des Aktors am Lenkerkörper des erfindungsgemäßen Fahrwerkslenkers gemäß dem Schnitt A-A aus Figur 3,
- Figur 8 eine Schnittansicht einer dritten Befestigungsvariante des Aktors am Lenkerkörper des erfindungsgemäßen Fahrwerkslenkers gemäß dem Schnitt A-A aus Figur 3,
- Figur 9 eine Schnittansicht einer vierten Befestigungsvariante des Aktors am Lenkerkörper des erfindungsgemäßen Fahrwerkslenkers gemäß dem Schnitt A-A aus Figur 3,
- Figur 10 eine Schnittansicht einer fünften und sechsten Befestigungsvariante des Aktors am Lenkerkörper des erfindungsgemäßen Fahrwerkslenkers gemäß dem Schnitt A-A aus Figur 3,
- Figur 11 eine Schnittansicht einer siebten Befestigungsvariante des Aktors am Lenkerkörper des erfindungsgemäßen Fahrwerkslenkers gemäß dem Schnitt B-B aus Figur 3,
- Figur 12 eine Schnittansicht einer achten Befestigungsvariante des Aktors am Lenkerkörper des erfindungsgemäßen Fahrwerkslenkers gemäß dem Schnitt B-B aus Figur 3,
- Figur 13 eine Draufsicht einer neunten Befestigungsvariante des Aktors am Lenkerkörper des erfindungsgemäßen Fahrwerkslenkers gemäß den Figuren 1 und 2,
- Figur 14 eine Schnittansicht der neunten Befestigungsvariante des Aktors am Lenkerkörper des erfindungsgemäßen Fahrwerkslenkers gemäß dem Schnitt C-C aus Figur 13,
- Figur 15 eine Schnittansicht einer zehnten Befestigungsvariante des Aktors am Lenkerkörper des erfindungsgemäßen Fahrwerkslenkers gemäß dem Schnitt A-A aus Figur 3, und
- Figur 16 eine Schnittansicht einer weiteren Ausführungsform eines Hubgetriebes des Aktors des erfindungsgemäßen Fahrwerkslenkers gemäß dem Schnitt B-B aus Figur 3.

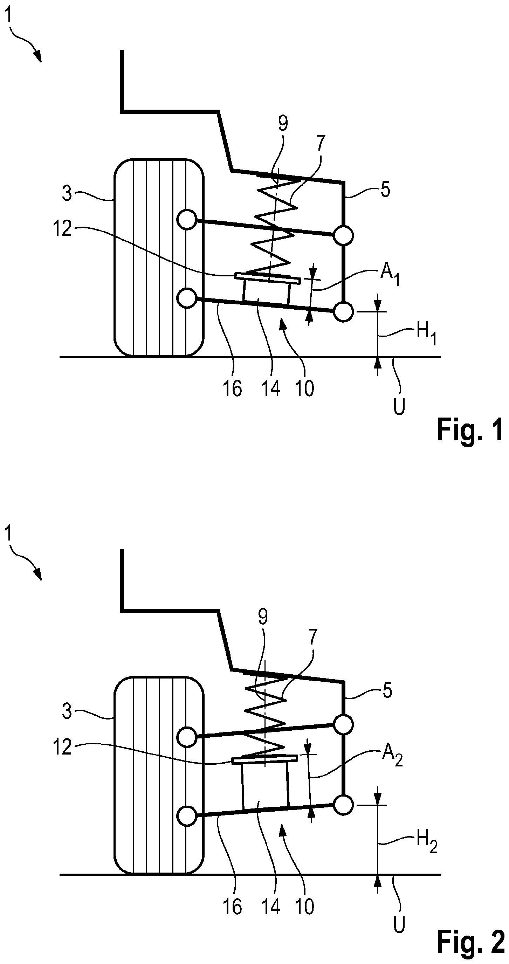

In den Figuren 1 und 2 ist eine Radaufhängung 1 gezeigt, mit der ein Rad 3 über zumindest einen Fahrwerkslenker 10 an einer Karosserie 5 eines Fahrzeugs im Wesentlichen vertikal bewegbar befestigt ist. Des Weiteren sind zwischen der Karosserie 5 und dem Fahrwerkslenker 10 eine Feder 7, ein Feder-Widerlager 12 und ein Aktor 14 angeordnet.

Der Aktor 14 ist dabei an einem Lenkerkörper 16 des Fahrwerkslenker 10 befestigt und trägt das Feder-Widerlager 12. Die Feder 7 stützt sich am Feder-Widerlager 12 mit einem Ende ab und mit dem anderen Ende an der Karosserie 5.

Über den Aktor 14 kann ein Abstand A zwischen dem Lenkerkörper 16 und dem Feder-Widerlager 12 und somit eine Position des Feder-Widerlagers 12 relativ zum Lenkerkörper 16 eingestellt werden.

Je nach Abstand A ist eine Höhe H einer Unterkante der Karosserie 5 über einem Untergrund U größer oder kleiner ausgeprägt. Die Höhe H entspricht somit einer Bodenfreiheit des Fahrzeugs.

Wenn der Aktor 14 so betätigt wird, dass der Abstand A von einem ersten Wert A1 (vgl. Figur 1) zu einem zweiten Wert A2 (vgl. Figur 2) um einen Differenzwert ΔA vergrößert wird, wird das Feder-Widerlager 12 und somit die Feder 7 translatorisch um den Differenzwert ΔA entlang einer Aktorverstellachse verschoben. Dadurch wird die Höhe H und somit die Bodenfreiheit des Fahrzeugs um einen Differenzwert ΔH von einem ersten Wert H₁ (vgl. Figur 1) zu einem zweiten Wert H₂ (vgl. Figur 2) vergrößert.

Analog wird die Bodenfreiheit des Fahrzeugs bei einer Verkleinerung des Abstands A ebenfalls verkleinert.

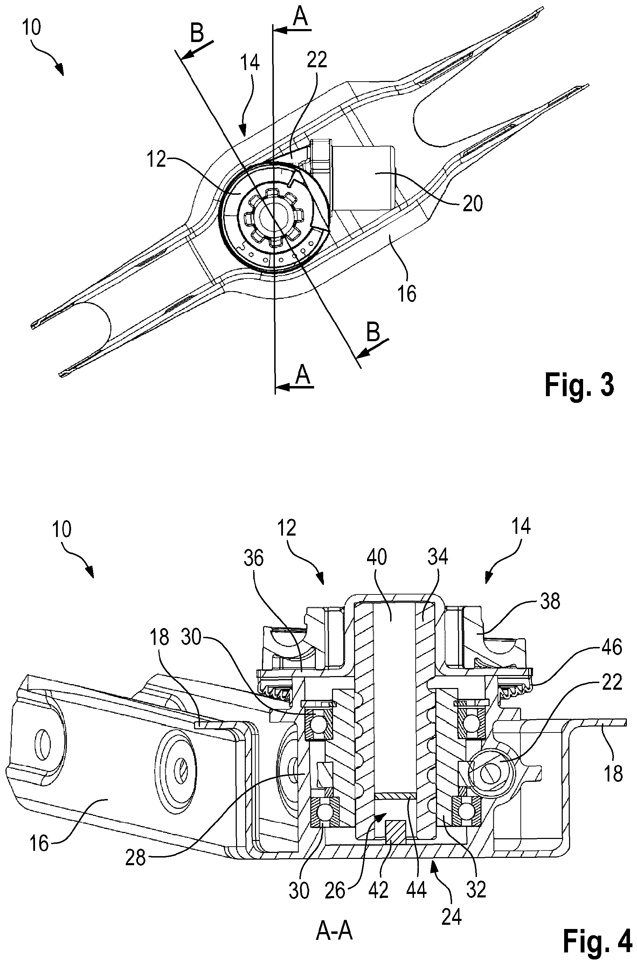

In den Figuren 3 bis 5 ist der Fahrwerkslenker 10 im Detail gezeigt. Figur 3 zeigt dabei eine Draufsicht des Fahrwerkslenkers 10. Wie oben bereits beschrieben, umfasst der Fahrwerkslenker 10 den Lenkerkörper 16 und den am Lenkerkörper 16 befestigten Aktor 14. Am Aktor 14 ist das Feder-Widerlager 12 angeordnet.

Der Lenkerkörper 16 hat in dieser Ausführungsform einen U-förmigen Querschnitt, durch den ein Aufnahmeraum gebildet wird, in dem der Aktor 14 zumindest teilweise aufgenommen ist.

An der offenen Seite des U ist ein Befestigungsflansch 18 angeformt, der im Wesentlichen senkrecht vom Lenkerkörper 16 nach außen hin absteht.

Der Querschnitt des Lenkerkörpers 16 ist natürlich nicht auf eine U-Form beschränkt, sondern kann jegliche andere Form aufweisen, beispielsweise eine H-Form.

Der Lenkerkörper 16 kann beispielsweise als Zweipunktlenker, Dreipunktlenker oder Vierpunktlenker ausgebildet sein und in einer Einzelradaufhängung oder einer Verbundlenkachse vorgesehen sein.

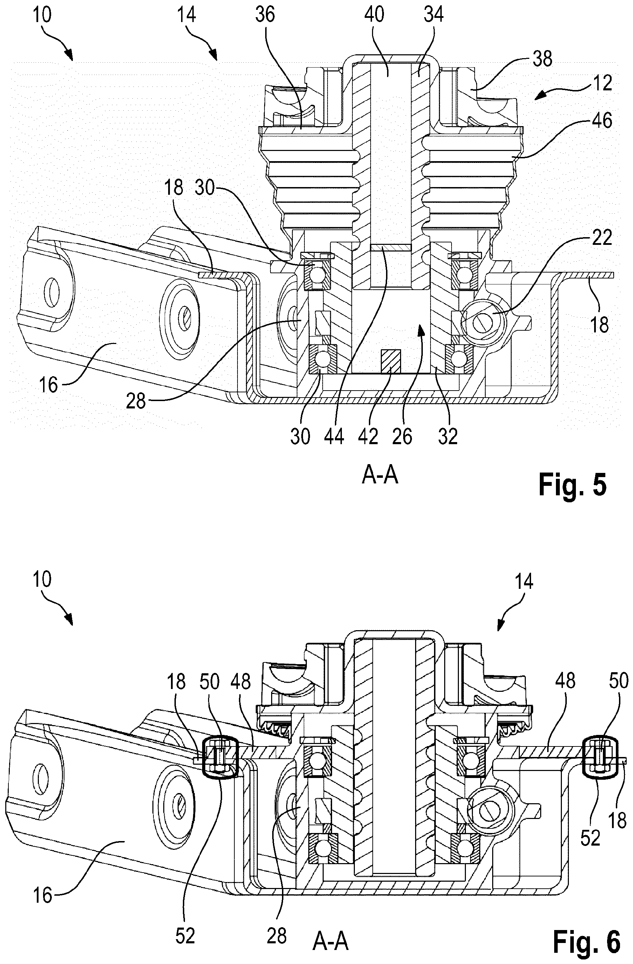

In den Figuren 4 und 5 ist der Aktor 14 im Detail gezeigt.

Der Aktor 14 umfasst einen Antrieb 20, ein Antriebsgetriebe 22, ein Hubgetriebe 24, Positionssensorik 26 und ein Aktorgehäuse 28 (vgl. Figuren 4 und 5).

Die Positionssensorik 26 ist optional.

Der Antrieb 20 kann elektrisch sein und als bürstenbehaftete oder bürstenlose Gleichstrommaschine oder als Reluktanzmaschine ausgeführt sein.

Das Antriebsgetriebe 22 kann beispielsweise als Schneckengetriebe, Planetengetriebe, Zugmittelgetriebe, Stirnradgetriebe und/oder Exzentergetriebe ausgebildet sein und überträgt, insbesondere untersetzt die Rotationsbewegung einer Welle des Antriebs 20 auf das Hubgetriebe 24.

Als Hubgetriebe 24 wird ein Bewegungsgewinde verwendet, das in dieser Ausführungsform ein Kugelumlauftrieb oder Trapezgewindetrieb ist. Je nach vorhandenem Platz kann das Hubgetriebe 24 einfach oder teleskopisch ausgeführt sein.

Das Hubgetriebe 24 umfasst im hier gezeigten Ausführungsbeispiel eine über Lager 30 im Aktorgehäuse 28 rotatorisch beweglich gelagerte Hubmutter 32, in der eine Hubspindel 34 axial beweglich gelagert ist.

Auf der Hubspindel 34 ist das Feder-Widerlager 12 angeordnet. Das Feder-Widerlager 12 weist in dieser Ausführungsform einen Federteller 36 und eine auf dem Federteller 36 angeordnete Halterung 38 auf.

In der Halterung 38 kann die Feder 7 aufgenommen werden.

Die optionale Positionssensorik 26 kann in einem durch die Hubspindel 34 abgegrenzten Installationsraum 40 vorgesehen sein. Die Positionssensorik 26 kann eine Bewegung der Hubspindel 34 zumindest optisch, elektrisch, kapazitiv, resistiv, induktiv und/oder magnetisch erfassen.

Dabei kann eine erste Positionserfassungskomponente 42, beispielsweise ein Hall-Sensor, an einer Grundfläche des Aktors 14 und eine zweite Positionserfassungskomponente 44, beispielsweise ein Magnet, innerhalb der Hubspindel 34 angebracht sein. Die Positionierung der Positionserfassungskomponenten 42, 44 ist natürlich nur exemplarisch zu verstehen.

Alternativ kann die Bewegung der Hubspindel 34 durch eine Erfassung der Drehung der Motorwelle des Antriebs 20 erfasst werden.

Zum Schutz vor einem Eindringen von Flüssigkeit oder Fremdkörpern ist zwischen dem Aktorgehäuse 28 und dem Feder-Widerlager 12 eine Dichtung 46 in Form eines Faltenbalgs angeordnet. Im ausgefahrenen Zustand der Hubspindel 34 gemäß Figur 5 ist der Faltenbalg genauer erkennbar.

Bei einer manuell oder automatisch angesteuerten Betätigung des Aktors 14 wird der Antrieb 20 aktiviert, über den eine Eingangswelle des Antriebsgetriebes 22 zum Rotieren gebracht wird. Das Antriebsgetriebe 22 ist mit der Hubmutter 32 wirkungstechnisch gekoppelt und überträgt die Rotationsbewegung auf die Hubmutter 32, die dadurch ebenfalls in eine Rotationsbewegung um eine Längsachse des Aktors 14 versetzt wird.

Die Hubmutter 32 ist derart mit der Hubspindel 34 gekoppelt, dass die Rotationsbewegung der Hubmutter 32 in eine translatorische Axialbewegung der Hubspindel 34 umgewandelt wird.

Mit der Hubspindel 34 bewegt sich auch die zweite Positionserfassungskomponente 44, wodurch sich ein Abstand zwischen der zweiten Positionserfassungskomponente 44 und der ersten Positionserfassungskomponente 42 verändert. Die Abstandsänderung kann von der ersten Positionserfassungskomponente 42 erfasst werden und in einer Steuereinheit (nicht dargestellt) einer bestimmten Stellung der Hubspindel 34 zugeordnet werden.

Die Hubspindel 34 bewegt das Feder-Widerlager 12 und demnach den Federteller 36 und die Halterung 38 je nach Richtung der Axialbewegung nach oben oder nach unten, wodurch sich der Abstand A zwischen dem Feder-Widerlager 12 relativ zum Lenkerkörper 16 verändert. Eine auf dem Feder-Widerlager 12 abgestützte Feder 7 wird durch die Verschiebung der Hubspindel 34 und somit des Feder-Widerlagers 12 entlang der Längsachse des Aktors 14 oder der Federachse 9 verschoben.

Je nach Art des Hubgetriebes 24 kann die Stellung der Hubspindel 34 ohne zusätzliche Arretiervorrichtung arretiert werden.

Ein Trapezgewindetrieb als Hubgetriebe 24 ist selbsthemmend, wodurch eine kraftschlüssige Arretierung durch eine Kombination der Reibungen im Hubgetriebe 24, im Antriebsgetriebe 22 und im Antrieb 20 erfolgt.

Ein Kugelumlaufgetriebe als Hubgetriebe 24 ist dagegen nicht selbsthemmend und muss dementsprechend separat arretiert werden. Dazu kann die rotatorische Bewegung der Motorwelle des Antriebs 20, der Eingangswelle des Antriebsgetriebes 22, der Hubmutter 32 und/oder die translatorische Bewegung der Hubspindel 34 formschlüssig oder kraftschlüssig verhindert werden.

Dafür kann eine separate Arretiervorrichtung (nicht dargestellt) verwendet werden. Die aktivierte Arretiervorrichtung hemmt dabei eine Bewegung der Hubspindel, der Hubmutter, der Eingangswelle und/oder der Motorwelle, insbesondere form- und/oder kraftschlüssig.

Die Arretierung kann beispielsweise mechanisch oder elektromechanisch durch einen zweiten Aktor, beispielsweise einen Hubmagnet, erfolgen.

In Figur 6 ist ein Fahrwerkslenker 10 gezeigt, bei dem der Aktor 14 in einer ersten Befestigungsvariante am Lenkerkörper 16 angebracht ist. Der Aktor 14 ist hier im eingefahrenen Zustand gezeigt und ist nahezu identisch zum Aktor 14 gemäß den Figuren 3 bis 5. Am Aktor 14 gemäß Figur 6 ist lediglich ein flanschartiger Vorsprung 48 seitlich am Aktorgehäuse 28 angebracht oder einteilig angeformt.

Der flanschartige Vorsprung 48 liegt auf dem Befestigungsflansch 18 des Lenkerkörpers 16 auf.

Die Befestigung des Aktors 14 am Lenkerkörper 16 erfolgt hier durch eine Schraubverbindung 52. Dazu sind die beiden Flansche 18, 48 mit Schrauben als Befestigungsmittel 50 aneinander befestigt.

Der Lenkerkörper 16 und das Aktorgehäuse 28 können hier aus einem metallischen Werkstoff, einem Kunststoff oder einem Hybridwerkstoff hergestellt sein.

Beispielsweise besteht der Lenkerkörper 16 und/oder das Aktorgehäuse 28 aus einem Glasfaser- oder Kohlenstofffaser verstärktem Kunststoff.

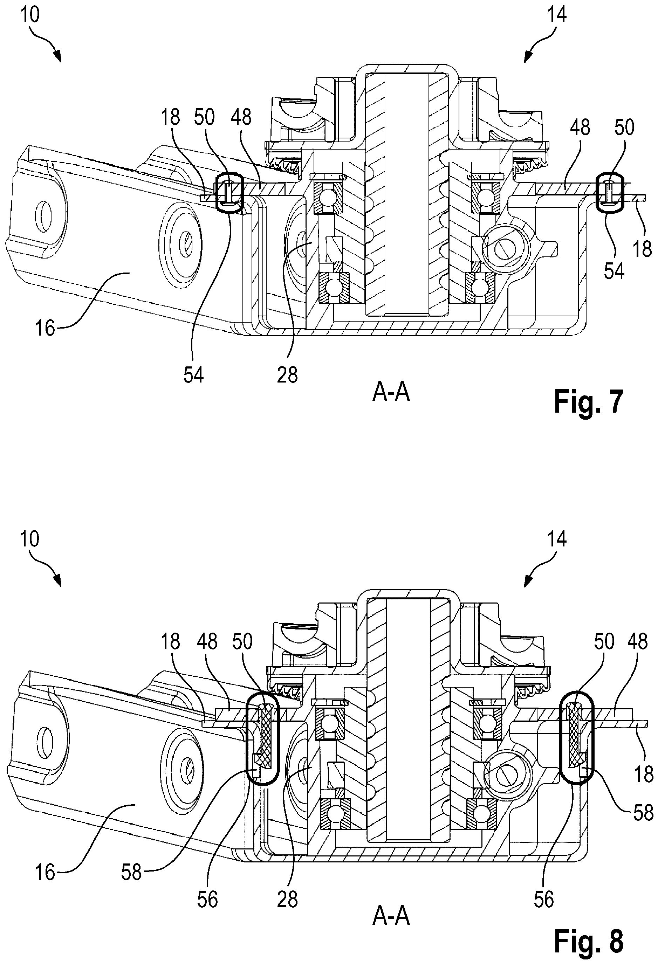

In Figur 7 ist eine Alternative gezeigt, bei der der Aktor 14 am Lenkerkörper 16 durch eine Nietverbindung 54 befestigt ist. Dazu sind die beiden Flansche 18, 48 mit Nieten als Befestigungsmittel 50 aneinander befestigt.

In einer dritten Befestigungsvariante gemäß Figur 8 erfolgt die Befestigung des Aktors 14 am Lenkerkörper 16 durch eine formschlüssige Clipsverbindung 56. Dazu sind Rasthaken als Befestigungsmittel 50 am flanschartigen Vorsprung 48 separat angebracht oder einteilig angeformt. Die Rasthaken greifen in dafür vorgesehene Kerben oder Öffnungen 58 im Lenkerkörper 16 und bilden dadurch den Formschluss.

Die ersten drei Befestigungsvarianten gemäß den Figuren 6 bis 8 zeichnen sich dadurch aus, dass die Befestigung relativ einfach wieder gelöst werden kann.

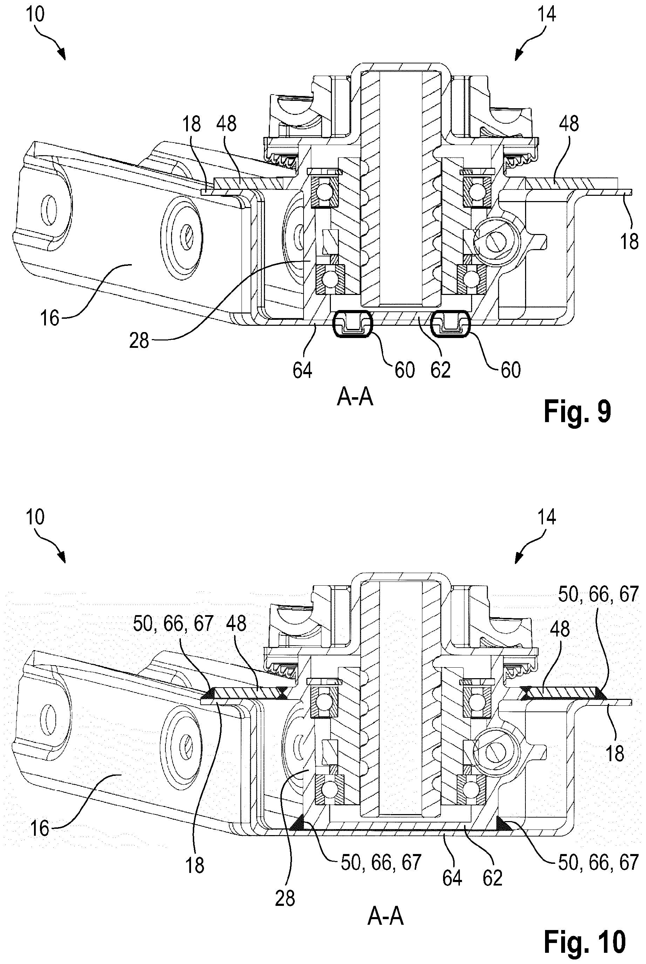

Figur 9 zeigt eine vierte Befestigungsvariante, bei der der Aktor 14 am Lenkerkörper 16 durch eine formschlüssige Clinchverbindung 60 befestigt ist. Dazu sind der Lenkerkörper 16 und das Aktorgehäuse 28 in einem metallischen Werkstoff ausgeführt, und durch plastische Deformation wird ein Formschluss zwischen dem Lenkerkörper 16 und dem Aktorgehäuse 28 hergestellt.

In der hier gezeigten Ausführungsform erfolgt die plastische Deformation an einer Grundfläche 62 des Aktorgehäuses 28 und einer Grundfläche 64 des Lenkerkörpers 16. Hier sind die Flansche 18, 48 nicht zur Befestigung notwendig.

Natürlich kann die plastische Deformation beispielsweise auch im Bereich der Flansche 18, 48 erfolgen.

Gemäß einer in Figur 10 gezeigten fünften Befestigungsvariante erfolgt die Befestigung des Aktorgehäuses 28 am Lenkerkörper 16 durch eine stoffschlüssige Schweißverbindung 66. Dazu werden beispielsweise die beiden Flansche 18, 48 und/oder die beiden Grundflächen 62, 64 miteinander verschweißt.

Der Lenkerkörper 16 und das Aktorgehäuse 28 können hier aus einem metallischen Werkstoff, einem thermoplastischen Kunststoff oder einem thermoplastischen Hybridwerkstoff hergestellt sein und bei jeweils gleicher Werkstoffpaarung verschweißt werden.

Alternativ kann die Befestigung in einer sechsten Befestigungsvariante durch eine stoffschlüssige Lötverbindung 67 analog zur Schweißverbindung 66 erfolgen. Dazu sind der Lenkerkörper 16 und das Aktorgehäuse 28 in einem metallischen Werkstoff ausgeführt und werden verlötet.

In der fünften und sechsten Befestigungsvariante stellt das Schweiß- bzw. Lötmaterial das Befestigungsmittel 50 dar.

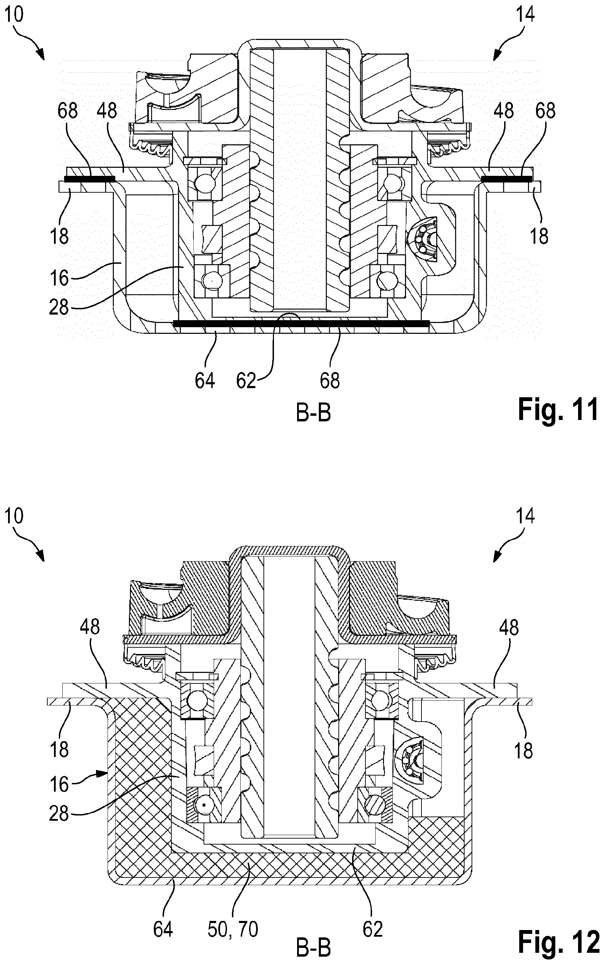

In Figur 11 ist eine sechste Befestigungsvariante gezeigt, bei der das Aktorgehäuse 28 durch eine stoffschlüssige Schmelzklebeverbindung 68 am Lenkerkörper 16 befestigt wird. Dazu ist der Lenkerkörper 16 in einem metallischen Werkstoff und das Aktorgehäuse 28 in einem thermoplastischen Kunststoff ausgeführt.

Zur Verbindung des Aktorgehäuses 28 mit dem Lenkerkörper 16 wird der Lenkerkörper 16, beispielsweise durch Laser- oder Induktionsheizung, auf die Schmelztemperatur des Kunststoffs des Aktorgehäuses 28 erhitzt. Anschließend wird das Aktorgehäuse 28 in finaler Position auf den erhitzten Lenkerkörper 16 gepresst, wodurch der Kunststoff des Aktorgehäuses 28 aufgrund der Temperatur des Lenkerkörpers 16 oberflächlich anschmilzt und nach Erstarrung eine stoffschlüssige Verbindung mit dem Lenkerkörper 16 eingeht.

Figur 12 zeigt eine siebte Befestigungsvariante, bei der der das Aktorgehäuse 28 durch eine stoffschlüssige Spritzgussverbindung 70 am Lenkerkörper 16 befestigt wird. Der Lenkerkörper 16 und das Aktorgehäuse 28 sind dazu in einem metallischen Werkstoff ausgeführt.

Der Lenkerkörper 16 und das Aktorgehäuse 28 werden als Einlegeteile in ein Spritzgusswerkzeug in finaler Position eingelegt, wobei die Werkzeughälften auf den beiden Einlegeteilen abdichten, sodass zwischen Lenkerkörper 16, Aktorgehäuse 28 und den Werkzeughälften eine Kavität entsteht. Im Spritzgussprozess wird ein thermoplastischer oder ein duroplastischer Kunststoff in die Kavität injiziert, welcher den Lenkerkörper 16 und das Aktorgehäuse 28 nach Erstarrung stoffschlüssig verbindet. Zur Erhöhung der Verbindungsfestigkeit können die Einlegeteile vorab mit einem Haftvermittler benetzt werden.

Hier stellt das Spritzgussmaterial das Befestigungsmittel 50 dar.

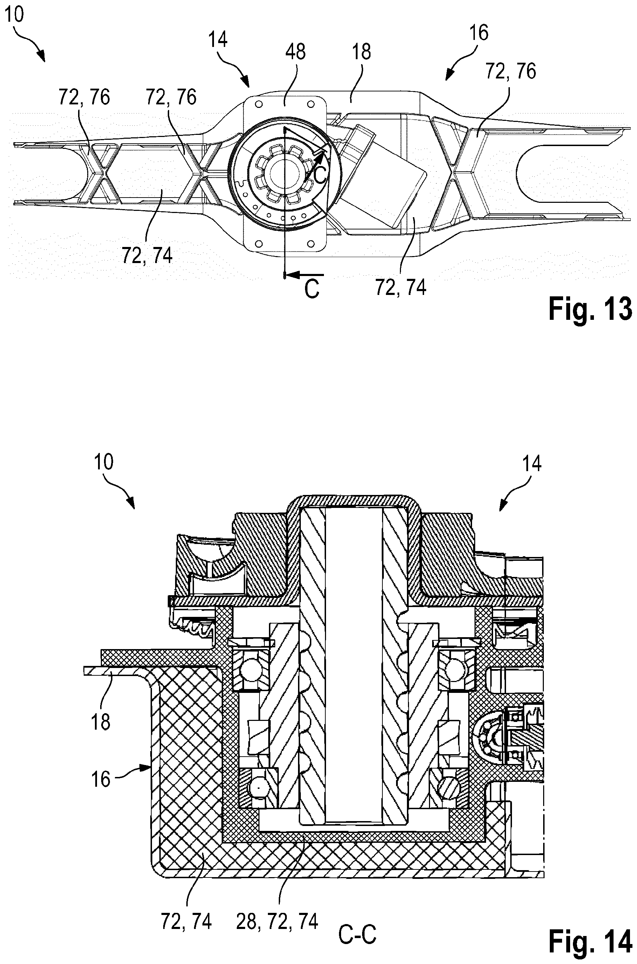

Die Figuren 13 und 14 zeigen eine achte Befestigungsvariante, bei der der Fahrwerkslenker 10 als Metall-Kunststoff-Verbundbauteil durch eine stoffschlüssige Hybridverbindung 72 gefertigt wird. Dazu ist der Lenkerkörper 16 in einem metallischen Werkstoff und das Aktorgehäuse 28 in einem thermoplastischen oder duroplastischen Kunststoff ausgeführt.

Zur Herstellung des Metall-Kunststoff-Verbundbauteils wird der Lenkerkörper 16 als Einlegeteil in ein Spritzgusswerkzeug eingelegt. Eine im Werkzeug entstehende Kavität bildet die Aktorgehäusegeometrie und optional die Geometrie von Verstärkungsrippen 76 ab. Anschließend wird der flüssige Kunststoff, beispielsweise in Form eines Spritzguss-, RTM oder T-RTM-Prozess, in die Kavität injiziert. Nach Erstarrung des Kunststoffs geht das so entstandene Kunststoffbauteil 74 mit dem Lenkerkörper 16 eine stoffschlüssige Verbindung ein. Die Verbindung kann beispielsweise durch Bildung mechanischer Hinterschnitte, zum Beispiel Löcher im Lenkerkörper 16 oder durch die Verwendung eines Haftvermittlers verstärkt werden.

Das eingespritzte Kunststoffbauteil 74 dient somit zum einen als Verstärkung des Lenkerkörpers 16 sowie als Aktorgehäuse 28.

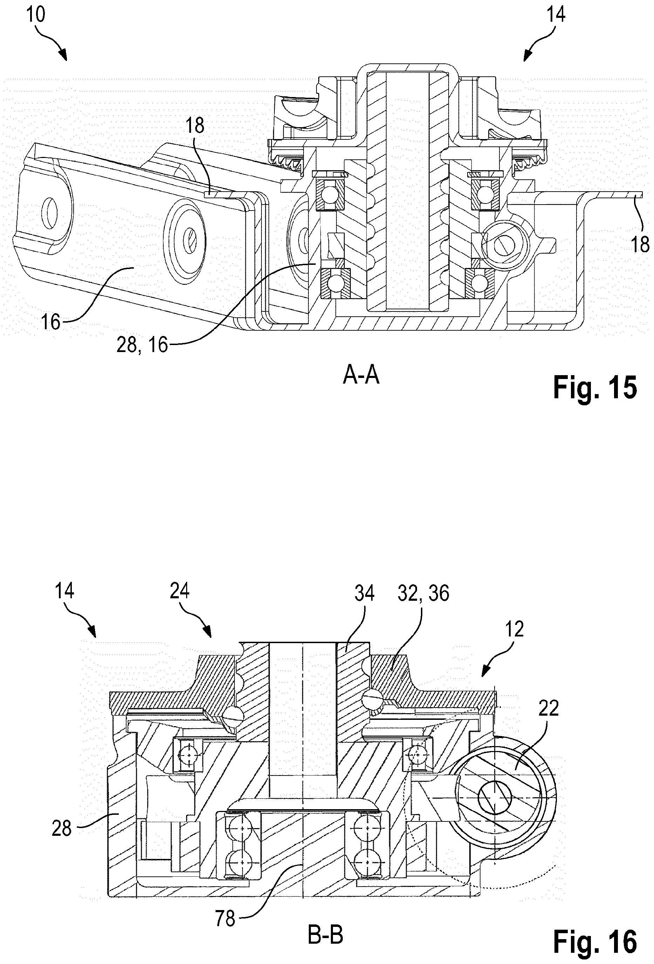

Gemäß einer in Figur 15 gezeigten neunten Befestigungsvariante erfolgt der Verbund des Aktorgehäuses 28 am Lenkerkörper 16 direkt in einem Fertigungsprozess. Das Aktorgehäuse 28 ist dabei einteilig am Lenkerkörper 16 angeformt, sodass der Lenkerkörper 16 und das Aktorgehäuse 28 zusammen ein Bauteil bilden.

Ein derartiges Bauteil kann beispielsweise durch Zerspanen aus dem Vollen, direktem Spritzguss oder RTM hergestellt sein. Als Material für den Verbund kommen metallische Werkstoffe sowie Kunststoffe und Hybridwerkstoffe infrage.

Es kann auch vorgesehen sein, dass der Lenkerkörper 16 und das Aktorgehäuse 28 jeweils ein Teilgehäuse des Aktors 14 bilden.

In allen oben beschriebenen Ausführungsformen des Fahrwerklenkers 10 wird im Hubgetriebe 24 des Aktors 14 die Hubmutter 32 in Rotation versetzt, wodurch die Hubspindel 34 axial verschoben wird.

In der Ausführungsform gemäß Figur 16 ist allerdings die Hubspindel 34 rotatorisch beweglich im Aktorgehäuse 28 gelagert und wird über das Antriebsgetriebe 22 in Rotation um ihre Längsachse 78 gebracht.

An der Hubspindel 34 ist das Feder-Widerlager 12 axial entlang der Längsachse 78 der Hubspindel 34 bewegbar gelagert.

Der Federteller 36 des Feder-Widerlagers 12 stellt hier gleichzeitig die Hubmutter 32 dar und bewegt sich bei einer Rotation der Hubspindel 34 axial entlang der Hubspindel 34.

Die auf dem Feder-Widerlager 12 abgestützte Feder 7 wird durch die Verschiebung der Hubmutter 32 und somit des Feder-Widerlagers 12 entlang der Längsachse 78 der Hubspindel 34 oder der Federachse 9 verschoben.

In anderen Worten ausgedrückt, ist in dieser Ausführungsform die Hubmutter 32 derart mit der Hubspindel 34 gekoppelt, dass die Rotationsbewegung der Hubspindel 34 in eine translatorische Axialbewegung der Hubmutter 32 umgewandelt wird.

Die vorhergehend beschriebenen Eigenschaften und Merkmale der einzelnen Ausführungsformen sind natürlich nur exemplarisch zu verstehen und können auch miteinander kombiniert werden.

## Patentansprüche

1. Fahrwerkslenker für eine Radaufhängung (1), mit einem Lenkerkörper (16), einem Feder-Widerlager (12) und einem Aktor (14), der zwischen dem Lenkerkörper (16) und dem Feder-Widerlager (12) angeordnet ist und mit dem die Position des Feder-Widerlagers (12) relativ zum Lenkerkörper (16) eingestellt werden kann, wobei der Aktor (14) ein Hubgetriebe (24) umfasst, das als ein Bewegungsgewinde ausgebildet ist und das eine Hubspindel (34) aufweist, auf der das Feder-Widerlager (12) angeordnet ist oder an der das Feder-Widerlager (12) axial beweglich gelagert ist, wobei der Aktor (14) ein Gehäuse (28) aufweist, an dem zumindest ein Befestigungsmittel (50) zur formschlüssigen und/oder kraftschlüssigen Befestigung des Gehäuses (28) mit dem Lenkerkörper (16) angebracht ist, **dadurch gekennzeichnet, dass** die Hubspindel (34) zumindest teilweise im Aktorgehäuse (28) aufgenommen ist und/oder im Aktorgehäuse (28) axial verschieblich oder rotierbar gelagert ist.

2. Fahrwerkslenker nach Anspruch 1, **dadurch gekennzeichnet, dass** das Aktorgehäuse (28) durch eine Schraubverbindung (52), eine Nietverbindung (54), eine Clipsverbindung (56) und/oder eine Clinchverbindung (60) am Lenkerkörper (16) befestigt ist.

3. Fahrwerkslenker nach Anspruch 1 oder 2, **dadurch gekennzeichnet, dass** der Aktor (14) ein Gehäuse (28) aufweist, das zumindest stoffschlüssig am Lenkerkörper (16) befestigt ist.

4. Fahrwerkslenker nach Anspruch 3, **dadurch gekennzeichnet, dass** das Aktorgehäuse (28) durch eine Schweißverbindung (66), eine Lötverbindung (67), eine Klebeverbindung (68) und/oder eine Spritzgussverbindung (70; 72) am Lenkerkörper befestigt ist.

5. Fahrwerkslenker nach einem der vorhergehenden Ansprüche, **dadurch gekennzeichnet, dass** der Lenkerkörper (16) so geformt ist, dass der Lenkerkörper (16) zumindest einen Teil eines Gehäuses (28) für den Aktor (14) bildet.

6. Fahrwerkslenker nach einem der vorhergehenden Ansprüche, **dadurch gekennzeichnet, dass** der Lenkerkörper (16) ein Metall-Kunststoff-Verbundbauteil ist.

7. Fahrwerkslenker nach einem der vorhergehenden Ansprüche, **dadurch gekennzeichnet, dass** der Lenkerkörper (16) einen Befestigungsflansch (18) aufweist, an dem ein flanschartiger Vorsprung (48) des Aktorgehäuses (28) anliegt.

8. Fahrwerkslenker nach einem der vorhergehenden Ansprüche, **dadurch gekennzeichnet, dass** der Lenkerkörper (16) im Querschnitt einen Aufnahmeraum bildet, in dem der Aktor (14) integriert oder aufgenommen ist.

9. Fahrwerkslenker nach einem der Ansprüche 1 bis 5 und 7, **dadurch gekennzeichnet, dass** das Hubgetriebe (24) eine Hubmutter (32) aufweist, die im Aktorgehäuse (28) rotierbar gelagert ist und die Hubspindel (34) axial verstellt.

10. Fahrwerkslenker nach einem der Ansprüche 1 bis 8, **dadurch gekennzeichnet, dass** das Hubgetriebe (24) eine Hubmutter (32) aufweist, die Teil des Feder-Widerlagers (12) ist und/oder durch die Hubspindel (34) axial verstellbar ist.

11. Fahrwerkslenker nach einem der vorhergehenden Ansprüche, **dadurch gekennzeichnet, dass** das Feder-Widerlager (12) direkt an der Hubspindel (34) angeordnet ist.

## Claims

1. A chassis control arm for a wheel suspension (1), comprising a control arm body (16), a spring abutment (12) and an actuator (14) which is arranged between the control arm body (16) and the spring abutment (12) and by means of which the position of the spring abutment (12) relative to the control arm body (16) can be adjusted, wherein the actuator (14) comprises a lifting gear (24) which is configured as a movement thread and which includes a lifting spindle (34) on which the spring abutment (12) is arranged or on which the spring abutment (12) is mounted for axial movement, wherein the actuator (14) includes a housing (28) on which at least one fastening means (50) is mounted for the positive and/or non-positive attachment of the housing (28) with the control arm body (16), **characterized in that** the lifting spindle (34) is at least partly received in the actuator housing (28) and/or is axially shiftably or rotatably mounted in the actuator housing (28).

2. The chassis control arm according to claim 1, **characterized in that** the actuator housing (28) is attached to the control arm body (16) by a screwed connection (52), a rivet connection (54), a clip connection (56) and/or a clinch connection (60).

3. The chassis control arm according to claim 1 or 2, **characterized in that** the actuator (14) includes a housing (28) which is attached to the control arm body (16) at least by a substance-to-substance bond.

4. The chassis control arm according to claim 3, **characterized in that** the actuator housing (28) is attached to the control arm body by a welded connection (66), a soldered connection (67), an adhesive connection (68) and/or an injection-molded connection (70; 72).

5. The chassis control arm according to any of the preceding claims, **characterized in that** the control arm body (16) is shaped such that the control arm body (16) forms at least part of a housing (28) for the actuator (14).

6. The chassis control arm according to any of the preceding claims, **characterized in that** the control arm body (16) is a metal-plastic composite component.

7. The chassis control arm according to any of the preceding claims, **characterized in that** the control arm body (16) includes a mounting flange (18) against which a flange-like protrusion (48) of the actuator housing (28) rests.

8. The chassis control arm according to any of the preceding claims, **characterized in that** the control arm body (16) in cross-section forms a receiving space in which the actuator (14) is integrated or received.

9. The chassis control arm according to any of claims 1 to 5 and 7, **characterized in that** the lifting gear (24) includes a lifting nut (32) which is rotatably mounted in the actuator housing (28) and axially adjusts the lifting spindle (34).

10. The chassis control arm according to any of claims 1 to 8, **characterized in that** the lifting gear (24) includes a lifting nut (32) which is part of the spring abutment (12) and/or can be axially adjusted by the lifting spindle (34).

11. The chassis control arm according to any of the preceding claims, **characterized in that** the spring abutment (12) is arranged directly at the lifting spindle (34).

## Revendications

1. Bras oscillant de châssis pour une suspension (1), comprenant un corps de bras oscillant (16), une butée de ressort (12) et un actuateur (14) qui est agencé entre le corps de bras oscillant (16) et la butée de ressort (12) et au moyen duquel la position de la butée de ressort (12) par rapport au corps de bras oscillant (16) peut être ajustée, l'actuateur (14) comprenant un engrenage de levée (24) qui est réalisé sous forme de filetage d'entraînement et présente une vis de levée (34) sur laquelle la butée de ressort (12) est agencée ou sur laquelle la butée de ressort (12) est montée de manière axialement mobile, l'actuateur (14) présentant un boîtier (28) sur lequel au moins un moyen de fixation (50) pour une fixation par coopération de formes et/ou de forces du boîtier (28) au corps de bras oscillant (16) est monté, **caractérisé en ce que** la vis de levée (34) est logée au moins partiellement dans le boîtier (28) de l'actuateur et/ou est montée axialement déplaçable ou rotative dans le boîtier (28) de l'actuateur.

2. Bras oscillant de châssis selon la revendication 1, **caractérisé en ce que** le boîtier (28) de l'actuateur est fixé au corps de bras oscillant (16) au moyen d'un assemblage vissé (52), d'un assemblage riveté (54), d'un assemblage par clips (56) et/ou d'un assemblage par clinchage (60).

3. Bras oscillant de châssis selon la revendication 1 ou 2, **caractérisé en ce que** l'actuateur (14) présente un boîtier (28) qui est fixé au corps de bras oscillant (16) au moins par coopération de matières.

4. Bras oscillant de châssis selon la revendication 3, **caractérisé en ce que** le boîtier (28) de l'actuateur est fixé au corps de bras oscillant au moyen d'un assemblage par soudage (66), d'un assemblage par brasage (67), d'un assemblage par collage (68) et/ou d'un assemblage par moulage par injection (70 ; 72).

5. Bras oscillant de châssis selon l'une des revendications précédentes, **caractérisé en ce que** le corps de bras oscillant (16) est réalisé de telle sorte que le corps de bras oscillant (16) forme au moins une partie d'un boîtier (28) pour l'actuateur (14).

6. Bras oscillant de châssis selon l'une des revendications précédentes, **caractérisé en ce que** le corps de bras oscillant (16) est un composant composite en métal et matière plastique.

7. Bras oscillant de châssis selon l'une des revendications précédentes, **caractérisé en ce que** le corps de bras oscillant (16) présente une bride de fixation (18) sur laquelle une saillie (48) en forme de bride du boîtier (28) de l'actuateur prend appui.

8. Bras oscillant de châssis selon l'une des revendications précédentes, **caractérisé en ce qu'**en section transversale, le corps de bras oscillant (16) forme un espace de réception dans lequel l'actuateur (14) est intégré ou logé.

9. Bras oscillant de châssis selon l'une des revendications 1 à 5 et 7, **caractérisé en ce que** l'engrenage de levée (24) présente un écrou de levée (32) qui est monté rotatif dans le boîtier (28) de l'actuateur et déplace axialement la vis de levée (34).

10. Bras oscillant de châssis selon l'une des revendications 1 à 8, **caractérisé en ce que** l'engrenage de levée (24) présente un écrou de levée (32) qui fait partie de la butée de ressort (12) et/ou qui est axialement déplaçable au moyen de la vis de levée (34).

11. Bras oscillant de châssis selon l'une des revendications précédentes, **caractérisé en ce que** la butée de ressort (12) est agencée directement sur la vis de levée (34).
